# EUROPEAN PATENT APPLICATION

(11) **EP 4 024 985 A1**
(43) Date of publication of application: **06.07.2022**
(21) Application number: 20856741.2
(22) Date of filing: 08.06.2020
(51) Int. Cl.: H04W 72/04, H04W 72/08, H04W 74/08

(54) **WIRELESS COMMUNICATION NODE**

(30) Priority: 28.08.2019 JP 2019155616
(71) Applicant: NTT DOCOMO, INC., Chiyoda-Ku Tokyo 100-6150 (JP)
(72) Inventor: KURITA, Daisuke, Tokyo 100-6150 (JP); HARADA, Hiroki, Tokyo 100-6150 (JP)
(74) Representative: Hoffmann Eitle
(86) International application number: PCT/JP2020/022532
(87) International publication number: WO 2021/039015

(57) **Abstract**

In a state where a first radio link between a parent node and an IAB node, and a second radio link between the IAB node and a Child node are configured, the parent node determines availability of a radio resource for the child node in the IAM node according to allocation of a radio resource for the parent node in the IAB node.

## Description

### [Technical field]

The present invention relates to a radio communication node that is capable of configuration a radio access and a radio backhaul.

### [Background Art]

3rd Generation Partnership Project (3GPP) specifies Long Term Evolution (LTE), and with the aim of further speeding, specifies LTE-Advanced (hereinbelow, the LTE includes the LTE-Advanced), further, a succeeding system of the LTE called 5G New Radio (NR) or Next Generation (NG) and the like is being specufied.

For example, in the radio access network (RAN) of NR, an integrated access and backhaul (IAB) in which radio access to a user terminal (User Equipment, UE) and radio backhaul between radio communication nodes such as a radio base station (gNB) are integrated has been studied.

In IAB, an IAB node has a mobile termination (MT) function for connection with a parent node and a distributed unit (DU) function for connection with a child node or UE.

In the IAB, radio resources according to time division multiplexing (TDM), frequency divide multiplexing (FDM) and spatial divide multiplexing (SDM) are available for radio access and radio backhaul, although there is a restriction on half-duplex communication. From the DU's perspective, a downlink (DL), an uplink (UL), and a Flexible time-resource (D/U/F) are classified as one of the types of hard, soft, and Not Available (H/S/NA).

Specifically, the "hard" radio resource is a radio resource that is always available for a DU child link via which a corresponding time resource is connected to a child node or the UE, and the "soft" radio resource is a radio resource in which the availability thereof for the DU child link of the corresponding time resource is explicitly or implicitly controlled by the parent node.

In the 3GPP, a method of controlling radio resources for the MT and DU, which constitute half-duplex communication, is discussed (see Non-Patent Document 1).

As a result of such discussion, it is agreed that the parent node does not need to directly recognize the cell-specific signal or channel (For example, PRACH (Physical Random Access Channel) and SS/PBCH Block (SSB)) allocation information for the DU of the IAB node (See Non-Patent Document 2). It is also agreed that when a cell-specific signal or channel is configured to the DU of the IAB node, the IAB node treats the radio resource used for configuration of the cell-specific signal or channel as a hard DU resource.

### [Prior art Documents]

### [Non-patent Documents]

Non-Patent Document 1: "Summary of 7.2.3.3 Mechanisms for resource multiplexing among backhaul and access links", R1-1905739, 3GPP TSG RAN WG1 Meeting # 96 bis, 3GPP, April 2019
Non-Patent Document 2: "RAN1 Chairman's Notes", 3GPP TSG RAN WG1 Meeting # 97, 3GPP, May 2019

### [Summary of the Invention]

As described above, since the MT and DU of the IAB node are operated by half-duplex communication, a resource control method between the MT and DU becomes a problem.

For example, there is a concern about conflicts between the MT resource and the DU resource of the IAB node . Specifically, the DL signal transmitted from the parent node reaches the IAB node with a constant propagation delay. Therefore, in the IAB node, the transmission/reception timing between the DL signal received by the IAB node in a specific slot (symbol) and the DL signal transmitted to the child node in the slot next to the slot overlaps, and there is a possibility of collision between the MT resource and the DU resource.

Accordingly, an object of the present invention is to provide a radio communication node capable of avoiding collision between an MT resource and a DU resource when half-duplex communication is used.

One aspect of the present disclosure is a radio communication node (radio communication node 100A), a first radio link (Link_parent) between the radio communication node and the first radio node (IAB node), and a second radio link (Link _child) between the first radio node and a second radio node (child node) are configured, and the radio communication node comprises a control unit (control unit 150) that determines availability of a radio resource (DU resource) for the second radio node in the first radio node according to allocation of a radio resource (MT resource) for the radio communication node in the first radio node.

One aspect of the present disclosure is a radio communication node, wherein a first radio link between the radio communication node and the first radio node, and a second radio link between the first radio node and a second radio node are configured, and the radio communication node comprises a control unit that determines not to use at least a part of a slot between the radio communication node and the first radio node based on a delay between the radio communication node and the first radio node.

One aspect of the present disclosure is a radio communication node, wherein a first radio link between the radio communication node and the first radio node, and a second radio link between the first radio node and a second radio node are configured, and the radio communication node comprises a control unit that determines not to use at least a part of a slot between the radio communication node and the first radio node when a signal or channel specific to a cell in the first radio node is allocated.

### [Brief description of the drawings]

FIG. 1 is an overall schematic configuration diagram of a radio communication system 10.
FIG. 2 shows an example of a basic configuration of the IAB.
FIG. 3 is a diagram showing an example of a configuration of a radio frame, a sub-frame and a slot used in the radio communication system 10.
FIG. 4 shows a usage example of slots (symbols) between the radio communication node 100A and the radio communication node 100B.
FIG. 5 is a functional block diagram of the radio communication node 100A.
FIG. 6 is a functional block diagram of the radio communication node 100B.
FIG. 7 shows a schematic sequence of resource allocation between the radio communication node 100A and the radio communication node 100B.
FIG. 8 shows an example of a hardware configuration of CU 50 and radio communication nodes 100A through 100 C.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

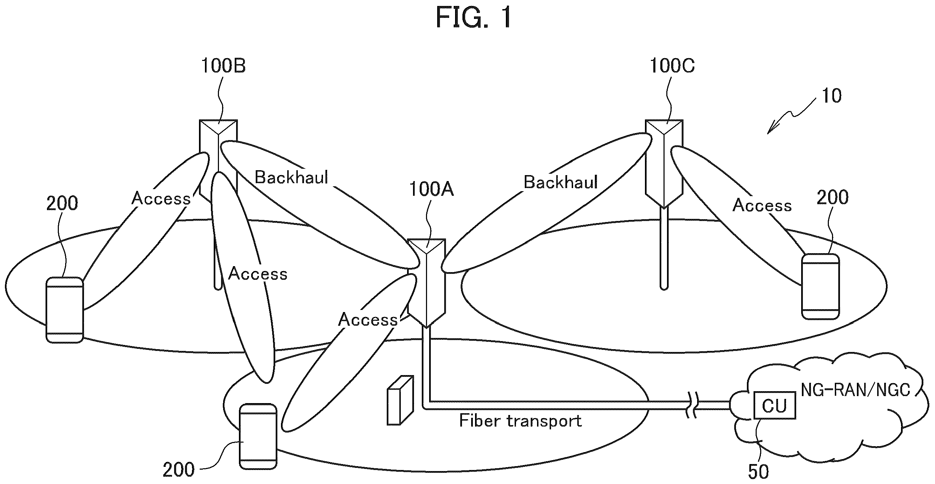

FIG. 1 is an overall schematic configuration diagram of the radio communication system 10 according to the present embodiment. The radio communication system 10 is a radio communication system using 5G New Radio (NR), and is constituted by a plurality of radio communication nodes and a user equipment.

Specifically, radio communication system 10 includes radio communication nodes 100A, 100B, 100C, and a terminal 200 (hereinafter, UE 200).

The radio communication nodes 100A, 100B, and 100C are capable of configuring a radio access with the UE 200 and a radio backhaul between the radio communication nodes. Specifically, a backhaul using a radio link (transmission path) is configured between the radio communication node 100A and the radio communication node 100B, and between the radio communication node 100A and the radio communication node 100C.

Accordingly, a configuration in which the radio access to the UE 200 and the radio backhaul between the radio communication nodes are integrated is called Integrated Access and Backhaul (IAB)..

In the IAB, the existing functions and interfaces defined for the radio access are reused. Particularly, the Mobile-Termination (MT), gNB-DU (Distributed Unit), gNB-CU (Central Unit), User Plane Function (UPF), Access and Mobility Management Function (AMF), and a Session Management Function (SMF), along with their corresponding interfaces, for example, NR Uu (between MT and gNB/ DU), F1, NG, X2, and N4 are used as a baseline.

The radio communication node 100A is connected to a core network (Next Generation Core (NGC) or 5GC) and a radio access network (NG-RAN) of the NR, via a wired transmission path such as a fiber transport. A central unit 50 (hereinafter, CU 50 which is a communication node is included in the NG-RAN/NGC. The NG-RAN and the NCG may be inclusively expressed simply as 'network'.

Note that, the CU 50 may be constituted by one the abovementioned UPF, AMF, and SMF, or a combination thereof. Alternatively, the CU 50 may be a gNB-CU as explained above.

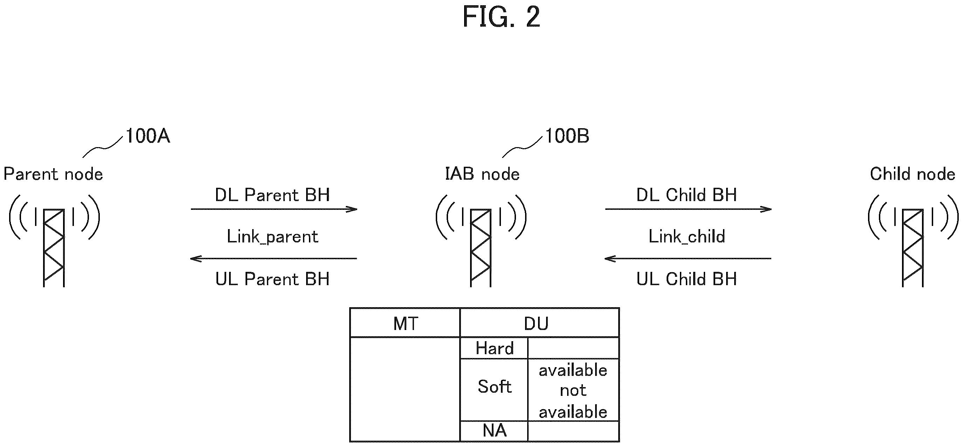

FIG. 2 is a diagram showing a basic configuration example of the IAB. As shown in FIG. 2, in the present embodiment, the radio communication node 100A constitutes a parent node in the IAB, and the radio communication node 100B (and the radio communication node 100C) constitutes (constitute) an IAB node (first radio node) in the IAB. The parent node may be referred to as an IAB donor.

The child node (second radio node) in the IAB is constituted by another radio communication node not shown in FIG. 1. Alternatively, the UE 200 may constitute a child node.

A radio link (first radio link) is configured between the parent node and the IAB node. Specifically, a radio link called Link_parent is configured.

A radio link (second radio link) is configured between the IAB node and the child node. Specifically, a radio link called Link_child is configured.

The radio link configured between such radio communication nodes is referred to as a radio backhaul (BH). Link _parent consists of DL Parent BH in the downlink direction and UL Parent BH in the uplink direction. Link_child consists of DL Child BH in the downlink direction and UL Child BH in the uplink direction.

Note that the radio link configured between the UE 200 and the IAB node or parent node is called an access link (AC).

The IAB node has a Mobile Termination (MT) which is a function for connecting to the parent node, and a Distribution Unit (DU) which is a function for connecting to the child node (or the UE 200). Note that, although it is omitted in FIG. 2, the parent node and the child node also have the MT and the DU.

Radio resources that the DU uses, from the DU's perspective, a downlink (DL), an uplink (UL), and a Flexible time-resource (D/U/F) are classified as one of the types of hard, soft, or Not Available (H/S/NA). Moreover, even in a soft (S), the radio resources are stipulated as available and not available.

The configuration example of the IAB shown in FIG. 2 uses CU / DU division; however, the IAB configuration need not necessarily be limited to such a configuration. For example, in the radio backhaul, the IAB can be constituted by a tunneling that uses GPRS Tunneling Protocol (GTP)-U / User Datagram Protocol (UDP) / Internet Protocol (IP).

The main advantage of such IAB configuration is that NR cells can be flexibly and densely arranged without increasing the density of the transport network. The IAB can be applied to various scenarios, such as arrangement of small cell outdoors, and support for indoor and mobile relays (for example, in buses and trains).

As radio resources used for radio access and radio backhaul, time division multiplexing (TDM), frequency divide multiplexing (FDM) and spatial divide multiplexing (SDM) are available, although there is a restriction on half-duplex communication. However, the radio resource is not necessarily limited to half-duplex communication, and may be full-duplex communication if other requirements are satisfied.

Moreover, as shown in FIGS. 1 and 2, the IAB can support deployment in a standalone (SA) mode of NR only or a non-standalone (NSA) mode that includes other RATs (LTE and the like).

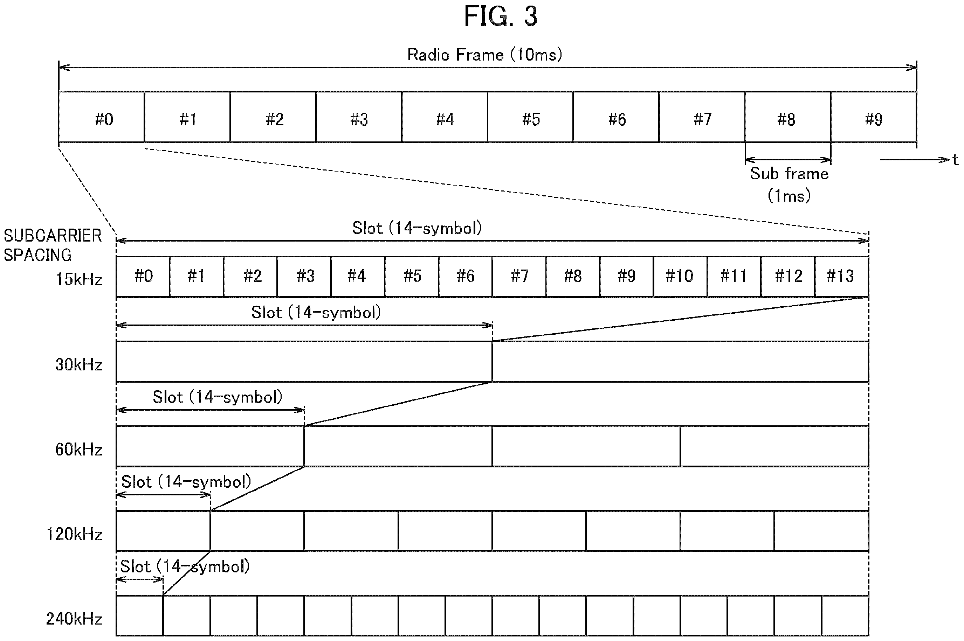

FIG. 3 shows an example of a configuration of a radio frame, a sub-frame, and a slot used in the radio communication system 10.

As shown in FIG. 3, in the present embodiment, the slot is constituted by 14 symbols. The symbol may be referred to as an OFDM symbol. The slot may also be referred to as a section in a predetermined time domain or time direction, or as a symbol period, symbol time, or the like.

The radio frame comprises 10 sub-frames. In addition, the radio communication system 10 supports multiple subcarrier spacing (SCS). SCS may be interpreted as numerology. Numerology is defined in 3GPP TS 38.300 and corresponds to one subcarrier spacing in the frequency domain.

As shown in FIG. 3, when the 14 symbol/slot configuration is maintained, the larger (wider) the SCS, the shorter the symbol period (and slot period).

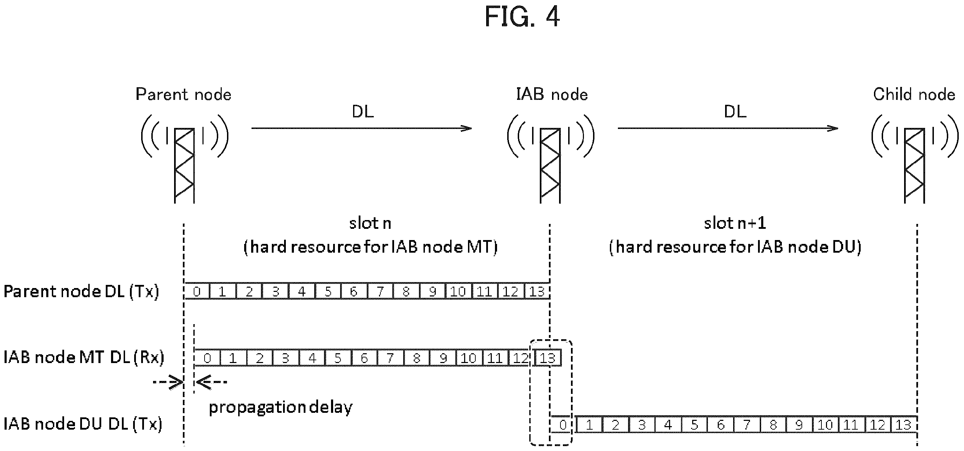

FIG. 4 shows a usage example of slots (symbols) between the radio communication node 100A and the radio communication node 100B. Specifically, FIG. 4 shows an example in which the MT resource and the DU resource of the IAB node collide.

As shown in FIG. 4, the timing at which the IAB node (MT) receives the signal (DL signal) transmitted from the radio communication node 100A (parent node) to the radio communication node 100B (IAB node) in the specific time domain, specifically, in the slot (For example, slot n) is delayed by propagation delay. That is, the DL signal arrives at the IAB node with a constant propagation delay.

On the other hand, when the IAB node transmits a signal (DL signal) to the child node from the symbol # 0 in the slot n + 1 (refer to the inside of the dotted line frame in the figure), a part of the signal (symbol # 13) transmitted from the IAB node and the transmission/reception timing overlap, that is, the MT resource and the DU resource of the IAB node collide.

In the present embodiment, the MT resource or the DU resource is treated so as to avoid the collision between the MT resource and the DU resource in the IAB node.

### (2)Function block configuration of radio communication system

Next, a functional block configuration of the radio communication node 100A constituting the radio communication system 10 and the CU 50 included in the NGC will be described.

### (2.1) Radio communication node 100A

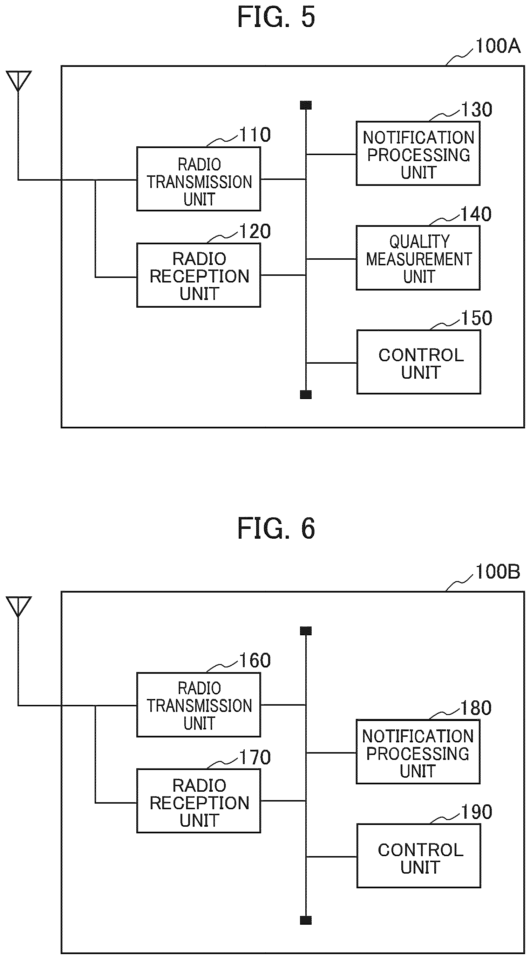

FIG. 5 is a functional block diagram of the radio communication node 100A constituting the parent node. As shown in FIG. 5, the radio communication node 100A includes a radio transmission unit 110, a radio reception unit 120, a notification processing unit 130, a quality measurement unit 140, and a control unit 150.

The radio transmission unit 110 transmits a radio signal according to specification of 5G. The radio reception unit 120 receives a radio signal according to specification of 5G. In this embodiment, the radio transmission unit 110 and the radio reception unit 120 execute radio communication with the radio communication node 100B constituting the IAB node.

In the present embodiment, the radio communication node 100A has functions of MT and DU, and the radio transmission unit 110 and the radio reception unit 120 also transmit and receive radio signals corresponding to the MT/DU.

Although not shown, the radio communication node 100A can provide a communication interface for realizing connection with the NGC side or the like. For example, interfaces such as X2, Xn, N2, N3 may be included.

The notification processing unit 130 executes processing related to notification with the radio communication node 100B (IAB node). In particular, in the present embodiment, the notification processing unit 130 executes an instruction concerning the allocation of the MT resource and the DU resource.

Specifically, the notification processing unit 130 can instruct the IAB node to instruct the DL/UL to the Flexible resource of the MT and the availability (IA/INA) of the DU to the Soft resource based on the control by the control unit 150.

Note that "IA " means that the DU resource is explicitly or implicitly indicated as available. "INA " means that the DU resource is explicitly or implicitly indicated as unavailable.

When the DU is a Soft resource, the notification processing part 130 can also instruct IA/INA to the Soft resource of the DU according to the allocation to the MT resource.

Further, the notification processing unit 130 can acquire a notification regarding the allocation of DU resources from the IAB node.

These notifications may be realized by, for example, signaling of the radio resource control layer (RRC). However, the notification may be realized by signaling using a MAC control element (CE).

The quality measurement unit 140 measures quality related to a radio link between the radio communication node 100A and the radio communication node 100B. In particular, in this embodiment, the quality measurement unit 140 can measure propagation delay (delay time) between the radio communication node 100A and the radio communication node 100B.

Specifically, the quality measurement unit 140 estimates propagation delay between the radio communication node 100A and the radio communication node 100B by using the reception timing of the random access channel, specifically, PRACH (Physical Random Access Channel) from the radio communication node 100B.

The control unit 150 controls each functional block constituting the radio communication node 100A. In particular, in this embodiment, the control unit 150 allocates MT resources and DU resources for the radio communication node 100B (IAB node).

Specifically, the control unit 150 can determine whether or not to use the radio resource (DU resource) for the child node (second radio node) in the IAB node according to the allocation of the radio resource (MT resource) for the radio communication node 100A (parent node) in the IAB node.

The control unit 150 can dynamically notify the IAB node of the availability of DU resources according to the resource allocation to the MT. The control unit 150 may notify the IAB node when the DU resource is used, or may notify the IAB node when the DU resource is not used. Alternatively, the control unit 150 may notify the IAB node when the DU resource is used or not used.

Further, the control unit 150 may determine not to use at least a part of the slot between the radio communication node 100A and the IAB node (first radio node), that is, the radio communication node 100B, based on the delay between the radio communication node 100A and the IAB node 100 (first radio node) measured by the quality measurement unit 140.

Specifically, the control unit 150 may, based on the magnitude of propagation delay (delay time) between the radio communication node 100A and the radio communication node 100B, for example, when propagation delay exceeds a threshold value, not use at least a part of the slot.

More specifically, the control unit 150 can prevent the last symbol in the slot (For example, symbol # 13) from being used for the transmission of the DL signal (and/or the reception of the UL signal) according to the magnitude of propagation delay.

The control unit 150 may not use not only the last symbol of the slot, but also a plurality of symbols (not necessarily starting from the last) in the slot or a plurality of slots for transmission.

Further, the control unit 150 may determine not to use at least a part of the slot between the radio communication node and the first radio node when a signal or channel specific to the cell in the IAB node (first radio node) is allocated. Note that symbols and slots that are not used may be the same as when propagation delay exceeds a threshold.

The information of the cell-specific signal or channel in the IAB node may include, for example, the following information.

(i)SS/PBCH Block (SSB) transmissions
(ii)Broadcast system information
(iii)Configured periodic CSI-RS (Channel State Information Reference Signal)
(iv)PRACH (Physical Random Access Channel) resources
(v)Resources for scheduling requests
(vi)SMTC (SSB based RRM Measurement Timing Configuration window)

The channel may include a control channel and a data channel. Control channels include PDCCH (Physical Downlink Control Channel), PUCCH (Physical Uplink Control Channel), PRACH (Physical Random Access Channel), and PBCH (Physical Broadcast Channel).

Data channels include PDSCH (Physical Downlink Shared Channel) and PUSCH (Physical Uplink Shared Channel).

Reference signals also include demodulation reference signals (DMRS), sounding reference signals (SRS), phase tracking reference signals (PTRS), and channel state information-reference signals (CSI-RS), which include channels and reference signals. The data may refer to data transmitted via a data channel.

### (2.2) Radio communication node 100B

FIG. 6 is a functional block diagram of the radio communication node 100B constituting the IAB node. As shown in FIG. 6, the radio communication node 100B includes a radio transmission unit 160, a radio reception unit 170, a notification processing unit 180, and a control unit 190. The radio communication node 100B includes a functional block similar to the radio communication node 100A (parent node) described above.

The radio transmission unit 160 transmits a radio signal according to specification of 5G. The radio reception unit 170 receives a radio signal according to specification of 5G. In this embodiment, the radio transmission unit 160 and the radio reception unit 170 execute radio communication with the radio communication node 100A constituting the parent node and radio communication with the child node (including the case of the UE 200).

The notification processing unit 180 executes processing related to notification with a radio communication node 100A (parent node). In particular, in this embodiment, the notification processing unit 180 can notify the radio communication node 100A of the difference of H/S/NA allocated to the DU resource of the radio communication node 100B (IAB node).

Further, the notification processing unit 180 may similarly notify the radio communication node 100A that when a cell-specific signal or channel (which may be referred to as a cell-specific resource) is allocated to the DU resource, the DU resource is treated as a Hard resource, and therefore is treated as a Hard resource.

The control unit 190 controls each functional block constituting the radio communication node 100B. In particular, in the present embodiment, the control unit 190 executes control regarding the allocation of MT resources and/or DU resources to the radio communication node 100B.

Further, the control unit 190 causes the notification processing unit 180 to execute the above-described notification based on the allocation status of the MT resource and/or the DU resource.

### (3)operation of radio communication system

Next, operation of the radio communication system 10 will be described. Specifically, an operation capable of avoiding the collision between the MT resource and the DU resource in the radio communication node 100B (IAB node) will be described.

The collision of the MT resource and the DU resource may mean that the resource allocation overlaps in the time direction (time domain), or it may mean that the transmission/reception timing of the DL signal received by the IAB node in a specific slot (symbol) and the DL signal transmitted to the child node in the slot following the slot overlaps in the IAB node.

### (3.1) Outline of operation

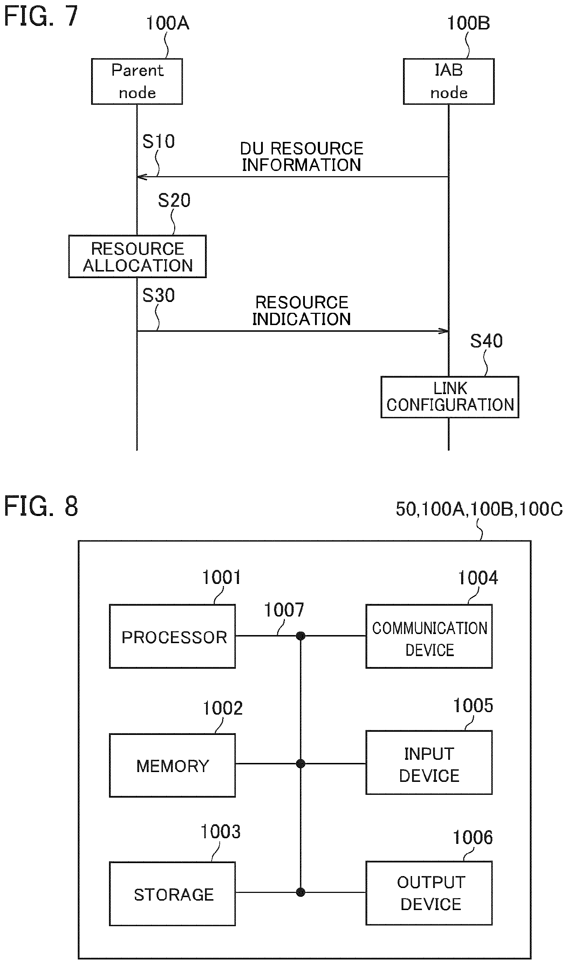

FIG. 7 shows a schematic sequence for resource allocation between the radio communication node 100A and the radio communication node 100B.

As shown in FIG. 7, the radio communication node 100B (IAB node) notifies the radio communication node 100B (IAB node) of the DU resource information allocated to the DU resource (S 10) . The DU resource may be allocated by the CU 50 or radio communication node 100A. Alternatively, the radio communication node 100B may allocate the radio resource. As will be described later, such notification of DU resource information is not required in some operation examples.

The radio communication node 100A (parent node) can allocate MT resources and/or DU resources for the IAB node according to the DU resource information notified from the IAB node (S 20).

The radio communication node 100A transmits an instruction regarding resources to the IAB node, such as whether DU resources are available or not, based on the allocation result of resources for the IAB node (S 30). It should be noted that the allocation of such resources and the instructions associated with the allocation are not necessary depending on operation example described later.

The radio communication node 100B executes a radio link, specifically, a configuration such as Link_child, based on an instruction regarding resources from the radio communication node 100A (S 40).

Hereinafter, an operation example in which the following collision between the MT resource and the DU resource can be avoided will be described.

- (operation Example 1) : The parent node dynamically informs the IAB node of the availability of DU resources according to the allocation of resources to the MT
- (operation Example 2): The parent node estimates propagation delay with the IAB node and does not use the last symbol or symbols of the slot for transmission, depending on the size of propagation delay.
- (operation Example 3): The parent node does not use the last symbol or symbols of the slot for transmission when the IAB node is allocated cell-specific resources.

### (3.2) Operation examples

Hereinafter, operation example 1 to 3 will be described in detail.

### (3.2.1) Operation example 1

In this operation example, the parent node instructs the IAB node to indicate DL/UL to the Flexible resource of MT and availability (IA/INA) to the Soft resource of DU.

As described above, Flexible resources can be used for DL or UL. "IA" means that DU resources are explicitly or implicitly indicated as available. "INA " also means that the DU resource is explicitly or implicitly indicated as unavailable.

The parent node may indicate either one of the DL/UL instruction to the Flexible resource of the MT and the availability to the Soft resource of the DU. Further, as described above, the instruction can be realized by signaling of an upper layer or a lower layer. Alternatively, some default value may be specified, and in the case of the default value (or other than the default value), it may be indicated implicitly (the same may apply to the notification in the following operation example) .

Also, when the DU is a Soft resource, the parent node may indicate the IA/INA to the Soft resource of the DU according to the allocation to the MT resource.

For example, when symbol # 13 of MT in slot n (see FIG. 4) is DL, INA is indicated to symbol # 0 of DU in slot n + 1.

Note that, as described above, the instruction of the INA (or IA) may be directed to one or more specific symbols in a slot, or to one or more slots, or to a plurality of symbols across a plurality of slots. In addition, the INA (or IA) may be indicated only in a specific case.

### (3.2.2) Operation example 2

In this operation example, the parent node can estimate propagation delay between the parent node and the IAB node using the reception timing of PRACH of the IAB node. Thus, the parent node can expect the collision between the MT resource and the DU resource.

It should be noted that the estimation (measurement) of propagation delay (delay time) between the parent node and the IAB node may be performed by using the reception timing of PRACH as described above, or may be performed by another method, for example, estimation using the round trip time of the upper layer.

Alternatively, the parent node may obtain information from other nodes constituting the network, such as CU 50, from which the delay time can be estimated.

In this case, the IAB node does not expect scheduling conflicts from the parent node with the Hard resource of the DU.

### (3.2.3) Operation example 3

In this operation example, the IAB node notifies the parent node of difference of H/S/NA (Hard, Soft or Not Available) allocated to the DU resource.

Furthermore, if a cell-specific signal is allocated to the DU resource, it is treated as a Hard resource (Hard DU resource), so the IAB node may notify the parent node as well.

The Hard DU resource may be interpreted as a radio resource that is always treated as an available radio resource (SSB, RACH, etc.) due to the allocation of a cell-specific signal or channel at the IAB node.

The cell-specific signals include, for example, SSB transmission, SMTC, and configuration of RACH as described above. In addition to cell specific signals, channel information or, more broadly, cell specific resources may also be included.

The parent node may assume that the IAB node uses the DU resource preferentially when a cell-specific signal is assigned to the DU resource, and may not allocate the resource as the MT resource.

### (4)Operational effects

According to the above-described embodiment, the following operational effects can be obtained. The parent node (radio communication node 100A) in the IAB can determine whether or not the radio resource (DU resource) for the child node in the IAB node can be used according to the allocation of the radio resource (MT resource) for the parent node in the IAB node.

Also, the parent node can determine not to use at least a part of the slot between the parent node and the IAB node based on the delay between the parent node and the IAB node.

The parent node may also determine not to use at least a part of the slot between the parent node and the IAB node if a signal or channel specific to the cell at the IAB node is allocated.

Therefore, in the IAB node, it can be surely avoided that the possibility of colliding with the MT resource and the DU resource by overlapping the transmission/reception timing between the signal (DL signal) received by the IAB node in a specific slot (symbol) and the signal (DL signal) transmitted to the child node in the slot next to the slot. Thus, the MT resource and the DU resource of the IAB node can be more efficiently utilized.

### (5)Other Embodiments

Although the contents of the present invention have been described by way of the embodiments, it is obvious to those skilled in the art that the present invention is not limited to what is written here and that various modifications and improvements thereof are possible.

Although the contents of the present invention have been described by way of the embodiments, it is obvious to those skilled in the art that the present invention is not limited to what is written here and that various modifications and improvements thereof are possible.

For example, in the embodiments explained above, the names of parent node, IAB node, and child node are used; however, as long as the configuration of the radio communication node in which the radio backhaul between the radio communication nodes such as gNB and radio access with a user terminal is integrated is adopted, the names can be different. For example, the nodes can simply be called a first node, a second node, and the like, or can be called an upper node, a lower node, a relay node, an intermediate node, and the like.

Moreover, the radio communication node can be simply called as a communication device or a communication node, or can be expressed as a radio base station.

Moreover, the block diagram used for explaining the embodiments (FIGS. 5 and 6) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

Furthermore, the CU 50 and the radio communication nodes 100A to 100C (reference device) explained above can function as a computer that performs the processing of the radio communication method of the present disclosure. FIG. 8 is a diagram showing an example of a hardware configuration of the reference device. As shown in FIG. 8, the reference device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the reference device (see FIGS. 5 and 6) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA) . Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto) . In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling) . Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)) .

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same) . For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe. A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. Aminislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, a common RB may be specified by RB index based on the common reference point of the carrier. PRB may be defined in BWP and numbered within that BWP.

BWP may include UL BWP (UL BWP) and DL BWP (DL BWP) . One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: Radio communication system
- 50: CU
- 100A, 100B, 100C: radio communication node
- 110: Radio transmission unit
- 120: Radio reception unit
- 130: Notification processing unit
- 140: Quality measurement unit
- 150: Control unit
- 160: Radio transmission unit
- 170: Radio reception unit
- 180: Notification processing unit
- 190: Control unit
- 200: UE
- 1001: Processor
- 1002: Memory
- 1003: Storage
- 1004: Communication device
- 1005: Input device
- 1006: Output device
- 1007: Bus

## Claims

1. A radio communication node, wherein
a first radio link between the radio communication node and the first radio node, and a second radio link between the first radio node and a second radio node are configured, and
the radio communication node comprises a control unit that determines availability of a radio resource for the second radio node in the first radio node according to allocation of a radio resource for the radio communication node in the first radio node.

2. A radio communication node, wherein
a first radio link between the radio communication node and the first radio node, and a second radio link between the first radio node and a second radio node are configured, and
the radio communication node comprises a control unit that determines not to use at least a part of a slot between the radio communication node and the first radio node based on a delay between the radio communication node and the first radio node.

3. A radio communication node, wherein
a first radio link between the radio communication node and the first radio node, and a second radio link between the first radio node and a second radio node are configured, and
the radio communication node comprises a control unit that determines not to use at least a part of a slot between the radio communication node and the first radio node when a signal or channel specific to a cell in the first radio node is allocated.
